# EUROPEAN PATENT APPLICATION

(11) **EP 4 691 803 A1**
(43) Date of publication of application: **11.02.2026**
(21) Application number: 25190454.6
(22) Date of filing: 18.07.2025
(51) Int. Cl.: B60C 23/04

(54) **WHEEL SENSOR SYSTEM**

(30) Priority: 09.08.2024 US 202463681199 P; 23.06.2025 US 202519245983
(71) Applicant: The Goodyear Tire & Rubber Company, Akron, OH 44316 (US)
(72) Inventor: ORLEWSKI, Piotr, 9021 Ettelbruck (LU)
(74) Representative: Kutsch, Bernd

(57) **Abstract**

A wheel sensor system for a vehicle (1) is disclosed. The system (100) comprises a plurality of wheel sensor assemblies (110); a connector electrically connectable to a vehicle diagnostics system (200) to be powered by the vehicle diagnostics system (200); and at least one electromagnetic energy transmitter (122) for wirelessly transmitting electromagnetic energy received via the connector to each wheel sensor assembly (110) of the plurality of wheel sensor assemblies (110). Each wheel sensor assembly (110) of the plurality of wheel sensor assemblies further comprises: one or more sensors (1100, 1200) for measuring one or more properties of a vehicle wheel (400); a sensor assembly antenna (112) for wirelessly receiving the electromagnetic energy transmitted by the electromagnetic energy transmitter (122); and a converter (113) for converting the electromagnetic energy received by the sensor assembly antenna (112) into an electrical current for supplying one or more components of the wheel sensor assembly (110).

## Description

### Field of the Invention

The present invention is directed to a wheel sensor system comprising a plurality of wheel sensor assemblies including one or more sensors for measuring a property of a vehicle wheel. Furthermore, the invention is directed to a vehicle comprising such a sensor system and a method of monitoring vehicle wheels, such as with the wheel sensor system.

### Background of the Invention

Most modern vehicles, such as passenger cars and trucks are equipped with tire pressure monitoring systems to improve road safety and ensure appropriate tire pressure, thereby optimizing rolling resistance of tires. Typically, tire pressure sensors are powered by batteries which have to be replaced after a couple of years. While tire pressure monitoring can be reliably carried out by such systems in most cases, further functionalities requiring more electrical energy may significantly reduce battery lifetime, resulting in more frequent battery replacement. Despite developments in the field of wheel sensor systems, significant room for improvement remains.

### Summary of the Invention

The invention relates to a wheel sensor system for a vehicle in accordance with claim 1 and to a vehicle in accordance with claim 11.

Dependent claims refer to preferred embodiments of the invention.

In one aspect, the present invention is directed to a wheel sensor system for a vehicle, comprising a plurality of wheel sensor assemblies and a connector electrically connectable to a vehicle diagnostics system to be powered by the vehicle diagnostics system. Furthermore, the wheel sensor system comprises at least one electromagnetic energy transmitter for wirelessly transmitting electromagnetic energy received via the connector to each wheel sensor assembly of the plurality of wheel sensor assemblies, wherein each wheel sensor assembly of the plurality of wheel sensor assemblies comprises i) one or more sensors for measuring one or more properties of a vehicle wheel, ii) a sensor assembly antenna for wirelessly receiving the electromagnetic energy transmitted by the electromagnetic energy transmitter, and iii) a converter for converting the electromagnetic energy received by the sensor assembly antenna into an electrical current for supplying one or more components of the sensor assembly.

### Brief Description of the Drawings

The invention will be described by way of example and with reference to the accompanying drawings in which:
FIG. 1 is a schematic view of a wheel sensor system provided in a vehicle, in accordance with an embodiment of the present invention, wherein wheel sensor assemblies are provided in the wheels;
FIG. 2 is a schematic detailed view of a connecting device of the wheel sensor system shown in Figure 1;
FIG. 3 is a schematic detailed view of a wheel sensor assembly of the wheel sensor system shown in Figure 1;
FIG. 4 is a schematic view of another wheel sensor system provided in a vehicle, in accordance with another embodiment of the present invention, wherein each wheel well comprises an electromagnetic energy transmitter;
FIG. 5 is a schematic view of yet another wheel sensor system provided in a vehicle, in accordance with yet another embodiment of the present invention, wherein wheel sensor assemblies are provided in the wheel wells; and
FIG. 6 is a schematic view of a method of monitoring vehicle wheels.

### Detailed Description of Preferred Embodiments of the Invention

In accordance with the first aspect, a wheel sensor system for a vehicle comprises a plurality of wheel sensor assemblies and a connector (or, an electrical connector) electrically connectable to a vehicle diagnostics system to be powered by the vehicle diagnostics system. Furthermore, the wheel sensor system comprises at least one electromagnetic energy transmitter for wirelessly transmitting electromagnetic energy (or, in other words, wirelessly transferring power) received via the connector to each wheel sensor assembly of the plurality of wheel sensor assemblies, wherein each wheel sensor assembly of the plurality of wheel sensor assemblies comprises i) one or more sensors for measuring one or more properties of a vehicle wheel, ii) a sensor assembly antenna for wirelessly receiving the electromagnetic energy transmitted (or, in other words, the power transferred) by the electromagnetic energy transmitter, and iii) a converter for converting the electromagnetic energy (or, in other words, the power) received by the sensor assembly antenna into an electrical current for supplying one or more components of the sensor assembly.

Thus, the wheel sensor system allows to wirelessly power the wheel sensor assemblies by means of an electromagnetic energy transmitter powered via a connector which is electrically connectable, such as pluggable, to a vehicle diagnostics system. Thus, the wheel sensor assemblies do not need to rely only on individual batteries which may require frequent replacement, particularly in cases of relatively high energy consumption of the wheel sensor assemblies. In contrast, the provision of electrical energy, or in other words, power, via a connector connectable to a vehicle's diagnostics system allows in most applications a practically unlimited long term power supply. For instance, such a reliable long term electrical energy supply is of particular importance in case of high energy consumption of high frequency data transmission and/or complex processing in the wheel sensor assembly.

In one embodiment, the vehicle diagnostics system is a vehicle on-board diagnostics system, and the connector is a plug electrically connectable (and/or pluggable) to the vehicle on-board diagnostics system. For instance, such a plug allows an easy connection to the on-board diagnostics system.

In another embodiment, the vehicle diagnostics system is an OBD-II system, and the connector is optionally a plug, preferably adapted to be plugged into an OBD-II reading port (or, in other words, reading socket or diagnostics port) of the OBD-II system. Thus, the wheel sensor system may include a standard plug fitting an OBD-II reading port. In addition, or alternatively, the plug is adapted to one or more of i) receive electrical energy, or power, such as from the OBD-II reading port; ii) receive and/or transmit information provided by the OBD-II system, such as from the OBD-II reading port; and iii) provide information from the wheel sensor system to the OBD-II system, particularly via its reading port.

In still another embodiment, the wheel sensor system comprises a connecting device which comprises the plug, and is configured to power the at least one electrical energy transmitter by means of power received via the plug. Optionally, the connecting device also comprises the electrical energy transmitter.

In still another embodiment, the electrical energy transmitter, is adapted to transmit electrical energy, or, in other words transfer power, by one of RF (radio frequency) power transfer, LF (low frequency) power transfer, NFC (near field communication) power transfer, and inductive power transfer. Optionally, the energy transmitter comprises an antenna, and/or an emitter chip. Optionally, utilized frequencies range from 1 kHz to 300 GHz, preferably to 50 MHz. Optionally, LF is within a range of 30 kHz to 300 kHz; RF is within a range of 20 kHz to 300 GHz, or to 50 MHz; and NFC operates within a frequency range of 13 MHz to 14 MHz. In another option, inductive power transfer operates within a range of 1 kHz to 200 kHz, or within a range of 10 kHz to 200 kHz, or of 10 kHz to 100 kHz.

In still another embodiment, the connecting device is one or more of: i) a portable connecting device, such as a dongle; ii) adapted to receive and read on-board diagnostics information, such as from the OBD-II reading port; iii) adapted to wirelessly transmit on-board diagnostics information received via the plug; iv) a wireless communication and/or energy supply dongle; v) adapted to wirelessly receive and/or read information from the wheel sensor assemblies; and vi) adapted to process (or re-process) and/or wirelessly transmit information received from one or more of a) one or more of the wheel sensor assemblies, and b) the vehicle on-board diagnostics system. Preferably, the connecting device is adapted to wirelessly transmit information to a data cloud.

In still another embodiment, wireless transmission of information and/or data is carried out by one or more of GSM, Bluetooth^{®}, Bluetooth^{®} LE, WiFi, LoRaWan, wireless network, radio frequency transmission, or other suitable techniques.

In still another embodiment, said wireless transmission of information and/or data, such as from the wheel sensor assemblies, e.g., to the connecting device, is carried out at a frequency of more than 1 kHz, preferably of more than 6 kHz. Such a relatively high transmission frequency may typically require more electrical energy than sending a sensor status or measurement result at relatively low frequencies, such as below 0.1 kHz.

In still another embodiment, the sensor assembly antenna is a fractal antenna, or in other words a fractal receiving antenna. Said antenna is preferably enclosed in a housing of the wheel sensor assembly, preferably together with further components of the wheel sensor assembly. The provision of such an antenna helps to integrate the antenna in the sensor assembly in a compact manner, e.g., without requiring separate attachment of the antenna.

In still another embodiment, the one or more sensors include one or more of a tire pressure sensor, a temperature sensor, an acceleration sensor (preferably multiple acceleration sensors), a strain sensor, a deformation sensor (e.g., optical or magnetic), a tread wear sensor, an optical sensor (e.g., for measuring tread depth), and an acoustic sensor.

In still another embodiment, one or more of the sensors include a sampling rate of more than 1 kHz, preferably of more than 6 kHz. For instance, one or more acceleration sensors may include such (relatively high) sampling rates. Sensors having a relatively high sampling rate typically require more electrical energy than sensors having a relatively low sampling rate. Typical prior art temperature sensors and/or low frequency pressure sensors include much lower sampling rates, e.g., at least 10 times lower sampling rates than 1 kHz.

In still another embodiment, the components comprise one or more of the at least one sensor, a rechargeable battery, a sensor assembly transmitter, a data storage, a memory, and a processing unit. In addition, or alternatively, said electrical current is a DC current. In a preferred embodiment, the processing unit is configured to carry out Fast Fourier Transformations. Such powerful processing units typically consume relatively large amounts of electrical energy.

In still another embodiment, the processing unit is adapted to carry out one or more of tire grip estimation, tire friction estimation, tire footprint estimation, tire stiffness estimation, such as based on sensor data obtained from one or more of: one or more acceleration sensors, one or more strain sensors, one or more optical deformation sensors, and one or more magnetic deformation sensors. Such relatively complex estimations carried out by the processing unit of the wheel sensor assembly typically require a relatively large amount of electrical energy, which is difficult to supply by a conventional non-rechargeable battery provided in the sensor assembly.

In still another embodiment, the wheel sensor assembly comprises a rechargeable battery adapted to power the at least one sensor, and wherein the converter optionally supplies the electrical current (such as a DC current) to the rechargeable battery.

In still another embodiment, each wheel sensor assembly comprises a wheel sensor assembly transmitter for wirelessly transmitting data based on measurements from said one or more sensors.

In still another embodiment, the wheel sensor assembly transmitter is adapted to transmit said data to one or more of the connecting device, the vehicle (such as to the diagnostics system), a cloud service, and a mobile communication device.

In still another embodiment, said electromagnetic energy transmitter comprises one or more of an RF transmitter, an NFC transmitter, and a magnetic induction transmitter.

In still another embodiment, the connecting device comprises the electromagnetic energy transmitter and, optionally, a housing at least partially comprising the electromagnetic energy transmitter. Optionally, the plug is one or more of extending from the housing, and attached to the housing, such as via an electric cable of the connecting device.

In still another embodiment, the wheel sensor system comprises a plurality of electromagnetic energy transmitters, wherein, optionally, one electromagnetic energy transmitter is provided for each wheel sensor assembly and preferably closer to one of the wheel sensor assemblies than to other wheel sensor assemblies of the plurality of wheel sensor assemblies, so as to wirelessly transmit electromagnetic energy to the one of the wheel sensor assemblies, and/or wherein the connecting device comprises a main (or, in other words, an intermediate electromagnetic energy transmitter, wirelessly transmitting energy to each of the plurality of electromagnetic energy transmitters. Optionally, said main/intermediate electromagnetic energy transmitter receives electrical energy, or power, from the plug, such as via electric lines.

In still another embodiment, the invention is directed to a vehicle comprising and/or being equipped with the wheel sensor system according to the first aspect and/or one or more of its embodiments.

In still another embodiment, the vehicle includes a plurality of wheel wells and a plurality of wheels provided in the (or respective) wheel wells, wherein for each wheel one wheel sensor assembly of the plurality of wheel sensor assemblies is mounted to one of: i) the wheel (particularly to a rim or tire of the wheel), and ii) a respective wheel well in which the wheel is provided or mounted. Provision of the wheel sensor assembly in the wheel, such as in a tire cavity can be advantageous for measuring some tire properties such as tire pressure.

Mounting wheel sensor assemblies in a wheel well, such as in a wheel housing, may ease electrical energy transmission to the wheel sensor assembly.

In still another embodiment, the vehicle is one of a truck and a car. The vehicle may comprise a trailer.

In still another embodiment, the vehicle comprises a CAN BUS system and the diagnostics system is adapted to receive information from the CAN BUS system and to provide the information to the wheel sensor system via the connector, or the plug, respectively.

In still another embodiment, each wheel of the plurality of wheels comprises a rim and a tire, and wherein the wheel sensor assembly is mounted to one of the rim and the tire. Optionally, the rim comprises a valve stem and the wheel sensor assembly is mounted to the valve stem. If mounted to the rim, the sensor assembly is preferably mounted to the rim within the tire cavity. Preferably, the wheel sensor assembly is mounted to the tire.

In still another embodiment, the vehicle is one of a car and a truck, and/or the tire is a pneumatic tire comprising an inner surface (such as of an innerliner of the tire) at least partially enclosing a tire cavity of the pneumatic tire. Optionally, the wheel sensor assembly is mounted to the inner surface and extends into the tire cavity.

In still another embodiment, the vehicle diagnostics system is an OBD-II system, and the connector is a plug pluggable to an OBD-II reading port (or, in other words socket) of the OBD-II system.

In still another embodiment, the vehicle includes an automotive DC battery including a voltage of at least 12V (preferably, selected from one of 12V, 24V, 32V, and 48V DC battery), and the diagnostics system is preferably powered by the automative DC battery.

In another aspect, the present invention is directed to a method of monitoring vehicle wheels, preferably using the wheel sensor system according to the first aspect, or one or more of its embodiments.

In one embodiment, said method of monitoring the vehicle wheels comprises one or more steps of:
Providing a connecting device, such as an OBD-II dongle, comprising an electrical converter and a transmitter for wirelessly transmitting electromagnetic energy (or, wirelessly transferring power);
Connecting, or plugging in, the connecting device, such as the OBD-II dongle, with its plug into a vehicle diagnostics system port, such as an OBD-II reading port or socket;
Powering the connecting device via its plug and/or said port;
Receiving vehicle information via said port;
Wirelessly transferring power to wheel sensor assemblies by means of the connecting device powered by said port;
Measuring at least tire pressures and/or accelerations with the wheel sensor assemblies;
Wirelessly transmitting wheel sensor information, such as tire sensor information (e.g., including one or more of tire pressures, and accelerations), from wheel sensor assemblies to the connecting device; and
Wirelessly transmitting information from the connecting device including said wheel sensor information and/or vehicle information received via said port to a remote receiver, such as one or more of a data cloud, a mobile communication device, a tablet, and a computer.

In still another aspect, the present invention is directed to a use of the wheel sensor system according to the first aspect, or one or more of its embodiments to monitor vehicle wheels.

In one embodiment, monitoring vehicle wheels comprises measuring tire (inflation) pressures and/or accelerations.

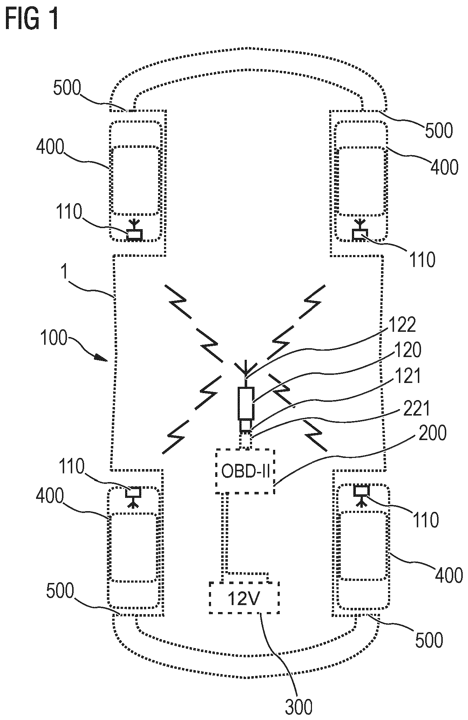

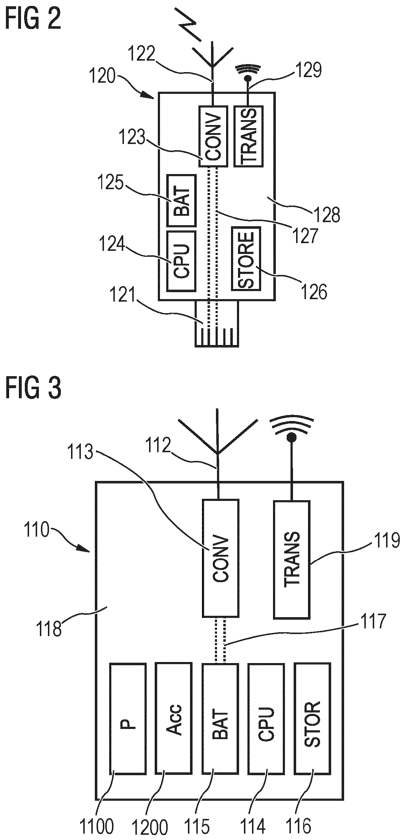

Figure 1 schematically shows a first preferred embodiment of a wheel sensor system 100 which is installed in a vehicle 1. In particular, such a wheel sensor system 100 can be conveniently retrofit to a vehicle 1 as explained further herein below. In the present and non-limiting embodiment, the wheel sensor system 100 is installed in a vehicle 1, here a passenger car, which comprises four wheels 400 provided in respective wheel housings 500 of wheel wells. Moreover, the vehicle 1 comprises an automative 12V DC battery 300 and an OBD-II on-board vehicle diagnostics systems 200 comprising an OBD-II reading port 221. In the present embodiment, each wheel 400, particularly a tire of each wheel 400, is equipped with a wheel sensor assembly 110, which is part of the wheel sensor system 100 and is mounted in a tire cavity, preferably as shown radially below a tread portion of each tire. Such wheel sensor assemblies 110, which are shown in further detail in Figure 3, preferably comprise at least a tire pressure sensor for measuring and/monitoring tire inflation pressure. Furthermore, the wheel sensor system 100 comprises a connecting device 120 including a plug 121 plugged into the OBD-II reading port 221 so as to receive power, and preferably also (vehicle) information, from the OBD-II reading port 221. In this context, it is emphasized that the electrical connection of the OBD-II system to the automotive battery 300 provides a permanent power supply to the connecting device 120. Furthermore, the connecting device 120 comprises an electromagnetic energy transmitter 122 for wirelessly transmitting electromagnetic energy, or, in other words for wirelessly transferring power to the wheel sensor assemblies 110, wherein the electromagnetic energy transmitter 122 is powered via the plug 121 which is powered by the OBD-II reading port 221. By basing the power transfer to the wheel sensor assemblies 110 on the OBD-II system, a practically almost unlimited energy source is provided. This is of particular advantage in case of using wheel sensor assemblies 110 with relatively high power consumption, such as in view of complex processing of sensor data in the wheel sensor assemblies 110, e.g., involving processing of acceleration measurement data obtained by acceleration sensors in the wheel sensor assemblies 110.

Figure 2 shows a schematic detailed view of an embodiment of the connecting device 120, which is provided in the present preferred embodiment in the form of an OBD-II dongle, which comprises an electromagnetic energy transmitter 122 (or, transmitter antenna) for transferring power to the wheel sensor assemblies (not shown in Figure 2). For this purpose, the connecting device 120 comprises the plug 121 which is adapted to be plugged into an OBD-II reading port (not shown in Figure 2). This plug 121 provides via an electric line connection 127 power to a converter 123 which powers the electromagnetic energy transmitter 122. Furthermore, the connecting device 120 comprises multiple further components such as a data storage 126, a processing unit 124, a battery 125 (which may, e.g., serve to provide the components of the connecting device 120 with electric energy when not connected to an OBD-II port), and a wireless signal or data transmitter or transceiver 129 (e.g., suitable to transmit information received through the plug 121 and/or from the wheel sensor assemblies). While not explicitly shown herein, the connecting device may include multiple further components such as a data memory, an (individual) receiver (such as being adapted to wirelessly receive information from the wheel sensor assemblies), a display, buttons, etc. The connecting device includes a housing 128 which at least partially comprises said components, and wherein the plug 121 preferably extends from the housing 128. One or more antennas of the transmitter 122 and/or transceiver 129 may be fully enclosed in the housing or at least partially extend outside of the housing 128.

Figure 3 shows a schematic more detailed view of a wheel sensor assembly 110, which can also be mentioned herein as tire sensor assembly. In the present embodiment, the wheel sensor assembly 110, comprises the sensor assembly antenna 112 for receiving electromagnetic energy transmitted by the electromagnetic energy transmitter 122 of the connecting device 120 (not shown in Figure 3). As known to the person skilled in the art, the electromagnetic energy transmitter 122 and the corresponding sensor assembly antenna 112 are preferably provided in a manner to optimize power transfer, e.g., by choosing an appropriate antenna length and/or emission frequency, or in other words transmission frequency. Optionally, a fractal receiving antenna may be used as sensor assembly antenna with limited space requirement. In order to use the electromagnetic energy received by the antenna 112 of the wheel sensor assembly 110 to power the wheel sensor assembly 110, the wheel sensor assembly 110 comprises a converter 113 for converting the received electromagnetic energy into an electrical (DC) current which can be provided via electric line connection 117 (which, for instance, could be a printed circuit connection or an electric wire connection) to a rechargeable battery 115. The battery 115 provides multiple (electric) components with power. In addition, or alternatively, the converter 113 can provide power directly to multiple of the components. In the present non-limiting embodiment, the wheel sensor assembly 110 further comprises a (tire) pressure sensor 1100 for measuring tire inflation pressure, at least one acceleration sensor 1200, a processing unit 114, a data storage 116, and a data transmitter 119 adapted to wirelessly transmit data based on measurements of the sensors 1100, 1200, and optionally information calculated by the processing unit 114 based on such measurements. For instance, such a transmission of data may be provided via Bluetooth^{®} LE, radio frequency transmission, or WAN. Preferably, the transceiver 129, and/or another receiver of the connecting device 120 (not shown in Figure 3) is adapted to receive such transmissions. The wheel sensor assembly 110 preferably comprises its components 112, 113, 114, 115, 116, 119, 1100, 1200 in a housing 118. Optionally, one or more antennas, receivers, transmitters, or transceivers may at least partially extend out of or from the housing 118. Preferably, the wheel sensor assembly 110 is attached to an inner surface of a tire in a tire cavity. Alternatively, the wheel sensor assembly could be attached to a rim, such as via a band or an adhesive.

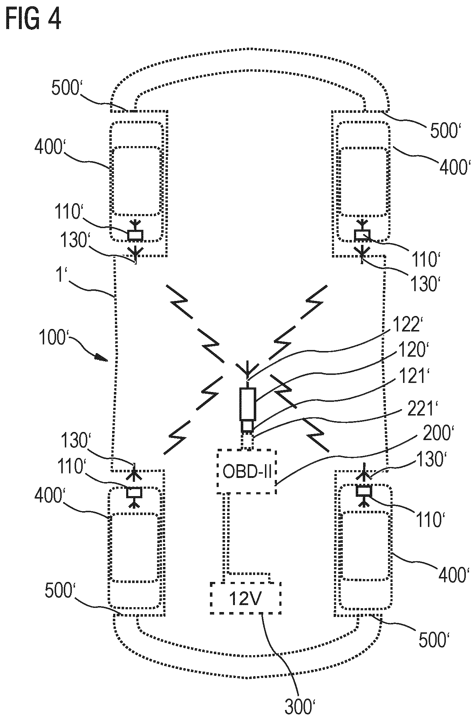

Figure 4 schematically shows another embodiment of the present invention, in which a wheel sensor system 100' is mounted to a vehicle 1'. Similar to the embodiment already shown in Figure 1, the vehicle 1' of Figure 4 comprises four wheels 400', corresponding wheel housings 500', an automotive battery 300', and an OBD-II system 200' comprising an OBD-II reading port 221'. The wheel sensor system 100' comprises a wheel sensor assembly 110' mounted to each of the wheels 400', particularly within the tire cavity of each of the wheels 400'. Furthermore, the wheel sensor system 100' comprises a connecting device 120' with a plug 121' pluggable into the OBD-II reading port 221'and adapted to wirelessly transfer power sourced from the OBD-II reading port 221' via the electromagnetic energy transmitter 122'. In contrast to the embodiment of Figure 1, the embodiment of Figure 4 comprises in each wheel housing 500' another electromagnetic energy transmitter 130' which is preferably mounted radially outwards (or radially above) a circumferential tire tread, wherein the radial direction is perpendicular to an axis of rotation of the wheel 400' and/or tire. At the same time, a corresponding wheel sensor assembly 110' is preferably mounted radially below or inwards the tire's tread. Even more preferably, the energy transmitter 130' and an energy receiving antenna of the wheel sensor assembly 110' are arranged essentially in parallel to one another so as to provide an efficient power transmission. In the present embodiment, the electromagnetic energy transmitter 122' can also be described as main electromagnetic energy transmitter 122' wirelessly transferring or supplying power to the electromagnetic energy transmitters 130' in the respective wheel housings 500'.

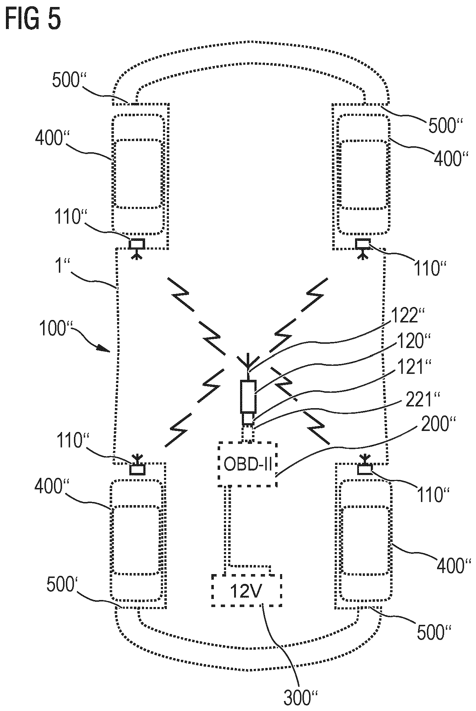

Figure 5 schematically shows yet another embodiment of a wheel sensor system 100". In this embodiment, the wheel sensor assemblies 110" are not arranged within the wheels 400" of the vehicle 1" but in the wheel wells, particularly in the wheel housings 500" of the wheel wells, outside the wheels 400". For instance, the sensor assemblies 110" could comprise a tread wear sensor, such as an optical tread wear sensor, which is adapted to scan a surface portion of the tire tread of the wheel 400". Another sensor example is an acoustic sensor directed towards the rotating wheel 400" and/or its tire, which can help to monitor tire status, such as uneven tire wear, particularly uneven tread wear. The wheel sensor assemblies 110" are again remotely and wirelessly powered by the energy transmitter 122" of the connecting device 120" which receives power via its plug 121" from a corresponding OBD-II reading port 221" of an OBD-II system 200" of the vehicle 1". The OBD-II system 200" receives its power from a vehicle battery 300".

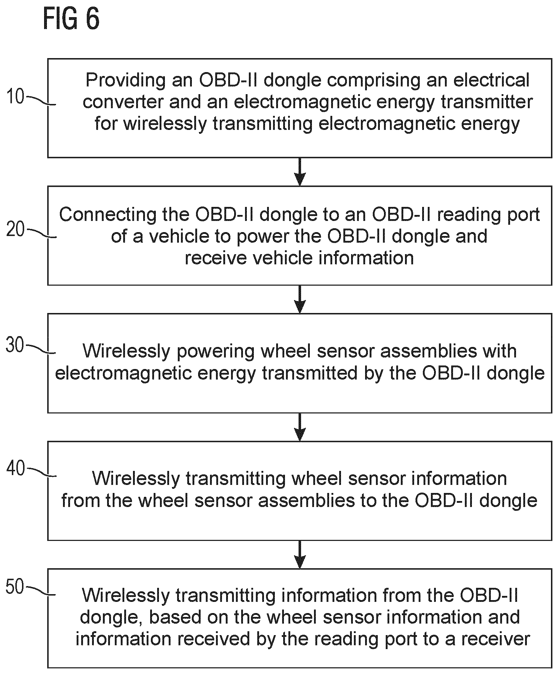

Figure 6 provides a flow chart of method steps in accordance with an embodiment of the present invention, which may, for instance, be carried out by using a wheel sensor system as shown already in the embodiment of Figure 1, or a system in accordance with an aspect, or one or more of its embodiments, disclosed herein. In particular, the embodiment of Figure 6 comprises the first step 10 of providing an OBD-II dongle comprising an electrical converter and an electromagnetic energy transmitter for wirelessly transmitting electromagnetic energy. In a second step 20, the method comprises connecting the OBD-II dongle with its plug to an OBD-II reading port of a vehicle to power the OBD-II dongle (particularly, including the converter and/or transmitter) and, optionally, to receive vehicle information. In a third step 30, the method comprises wirelessly powering wheel sensor assemblies with electromagnetic energy via the electromagnetic energy transmitter of the OBD-II dongle. In a fourth step 40, wheel sensor information is wirelessly transmitted from the wheel sensor assemblies to the OBD-II dongle. In a fifth step 50, information is wirelessly transmitted from the OBD-II dongle, wherein the information is based on the wheel sensor information, and optionally information received by the vehicle via the OBD-II reading port, to a receiver, preferably a remote receiver. This may also comprise re-processing such received information. For instance, a remote receiver could include one or more of a vehicle fleet manager, a data cloud, a mobile communication device, such as a mobile phone or tablet. In addition, or alternatively, such information could also be sent to the vehicle and optionally displayed to the driver.

It is emphasized that multiple embodiments of an aspect and/or features thereof can be combined with one another. Moreover, embodiments and/or features of one aspect can be embodiments and/or features of another aspect of the invention. Merely for the sake of conciseness, such combinations are not literally reiterated herein.

## Claims

1. A wheel sensor system for a vehicle (1), the system (100) comprising:
a plurality of wheel sensor assemblies (110);
a connector electrically connectable to a vehicle diagnostics system (200) to be powered by the vehicle diagnostics system (200);
at least one electromagnetic energy transmitter (122) for wirelessly transmitting electromagnetic energy received via the connector to each wheel sensor assembly (110) of the plurality of wheel sensor assemblies (110),
wherein each wheel sensor assembly (110) of the plurality of wheel sensor assemblies further comprises:
one or more sensors (1100, 1200) for measuring one or more properties of a vehicle wheel (400);
a sensor assembly antenna (112) for wirelessly receiving the electromagnetic energy transmitted by the electromagnetic energy transmitter (122); and
a converter (113) for converting the electromagnetic energy received by the sensor assembly antenna (112) into an electrical current for supplying one or more components of the wheel sensor assembly (110).

2. The wheel sensor system according to claim 1, wherein the vehicle diagnostics system (200) is a vehicle on-board diagnostics system, and the connector is a plug (121) electrically connectable to the vehicle on-board diagnostics system (200); and/or wherein the vehicle diagnostics system (200) is an OBD-II system, and wherein the connector is a plug (121) adapted to be plugged into an OBD-II reading port (221) of the OBD-II system.

3. The wheel sensor system according to claim 1 or 2, comprising a connecting device (120) which comprises the plug (121) and which is configured to power the at least one electromagnetic energy transmitter (122) by means of power received via the plug (121).

4. The wheel sensor system according to claim 3, wherein the connecting device (120) is at least one of:
portable;
adapted to receive and read on-board diagnostics information;
adapted to wirelessly transmit on-board diagnostics information received via the plug (121);
a wireless communication and energy supply dongle;
adapted to wirelessly receive and read information from the wheel sensor assemblies (110); and
adapted to wirelessly transmit information received from one or more of the wheel sensor assemblies (110) and the vehicle on-board diagnostics system (200).

5. The wheel sensor system according to at least one of the previous claims, wherein the one or more sensors (1100, 1200) include one or more of a tire pressure sensor (1100), a temperature sensor, an acceleration sensor (1200), a strain sensor, a deformation sensor, a tread wear sensor, an optical sensor, and an acoustic sensor; and/or wherein the components comprise one or more of: the one or more sensors (1100, 1200), a rechargeable battery (115), a sensor assembly transmitter (119), a data storage (116), a memory, and a processing unit (114).

6. The wheel sensor system according to at least one of the previous claims, wherein the wheel sensor assembly (110) comprises a rechargeable battery (115) adapted to power the one or more sensors (1100, 1200), and wherein the converter (113) supplies the electrical current to the rechargeable battery (115).

7. The wheel sensor system according to at least one of the previous claims, wherein each wheel sensor assembly (110) comprises a wheel sensor assembly transmitter (119) for wirelessly transmitting data based on measurements from the one or more sensors (1100, 1200).

8. The wheel sensor system according to at least one of the previous claims, wherein the vehicle diagnostics system (200) is a vehicle on-board diagnostics system and the connector is a plug (121) electrically connectable to the vehicle on-board diagnostics system (200),
wherein the wheel sensor system (100) further comprises a connecting device (120) which comprises the plug (121), and which is configured to power the at least one electromagnetic energy transmitter (122) by means of power received via the plug (121), and
wherein the wheel sensor assembly transmitter (122) is adapted to transmit said data to one or more of the connecting device (120), the vehicle (1), a cloud service, and a mobile communication device.

9. The wheel sensor system according to at least one of the previous claims, wherein said electromagnetic energy transmitter (122) comprises one of an RF transmitter, an NFC transmitter, and a magnetic induction transmitter; and/or wherein the connecting device (120) comprises the electromagnetic energy transmitter (122), and a housing (118) at least partially comprising the electromagnetic energy transmitter (122).

10. The wheel sensor system according to at least one of the previous claims, wherein the wheel sensor system (100) comprises a plurality of electromagnetic energy transmitters (122), wherein one electromagnetic energy transmitter (122) is provided for each wheel sensor assembly (110) and closer to one of the wheel sensor assemblies than to other wheel sensor assemblies so as to transmit electromagnetic energy to the one of the wheel sensor assemblies, and wherein the connecting device (120) comprises a main electromagnetic energy transmitter, transmitting energy to each of the plurality of electromagnetic energy transmitters.

11. A vehicle comprising the wheel sensor system (100) according to at least one of the previous claims, and, optionally, wherein the vehicle (1) further comprises a plurality of wheel wells (500) and a plurality of wheels (400) provided in the wheel wells, wherein for each wheel (400) one wheel sensor assembly (110) is mounted to one of: i) the wheel (400), and ii) a respective wheel well (500) in which the wheel (400) is provided.

12. The vehicle according to claim 11, further comprising a CAN BUS system, wherein the diagnostics system is adapted to receive information from the CAN BUS system and to provide the information to the wheel sensor system (110) via the connector.

13. The vehicle according to claim 11 or 12, wherein each wheel (400) of the plurality of wheels comprises a rim and a tire, and wherein the wheel sensor assembly (110) is mounted to one of the rim and the tire.

14. The vehicle according to at least one of the claims 11 to 13, wherein the vehicle (1) is one of a passenger car and a truck, wherein the tire is a pneumatic tire comprising an inner surface at least partially enclosing a tire cavity of the pneumatic tire, and wherein the sensor assembly (110) is mounted to the inner surface and extends into the tire cavity.

15. The vehicle according to at least one of the claims 11 to 14, wherein the vehicle diagnostics system (200) is an OBD-II system and the connector is a plug (121) pluggable to an OBD-II reading port of the OBD-II system; and/or wherein the vehicle (1) includes an automotive DC battery (300) including a voltage of at least 12V, and the diagnostics system (200) is powered by the automative DC battery (300).
